(19) **Europäisches Patentamt / European Patent Office / Office européen des brevets**

(11) **EP 3 827 295 B1**

(12) **FASCICULE DE BREVET EUROPEEN**

(45) Date de publication et mention de la délivrance du brevet:
**30.08.2023 Bulletin 2023/35**

(21) Numéro de dépôt: **19761917.4**

(22) Date de dépôt: **24.07.2019**

(51) Classification Internationale des Brevets (IPC):
**G02B 6/35** *(2006.01)*      **G02F 1/31** *(2006.01)*

(52) Classification Coopérative des Brevets (CPC):
**G02B 6/14; G02B 6/262; G02B 26/06; G02B 27/0927; G02B 27/0938;** G02B 6/4206

(86) Numéro de dépôt international:
**PCT/FR2019/051830**

(87) Numéro de publication internationale:
**WO 2020/021196 (30.01.2020 Gazette 2020/05)**

(54) **DISPOSITIF DE TRAITEMENT D'UN RAYONNEMENT LUMINEUX COMPRENANT UN DISPOSITIF DE CONVERSION DE LUMIERE MULTIPLAN**

**VORRICHTUNG MIT EINER LICHTUMWANDLUNGSVORRICHTUNG MIT MEHREREN EBENEN ZUR VERARBEITUNG VON LICHTSTRAHLUNG**

**DEVICE FOR PROCESSING LIGHT RADIATION, COMPRISING A MULTI-PLANE LIGHT CONVERSION DEVICE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.07.2018 FR 1856890**
**26.02.2019 FR 1901955**

(43) Date de publication de la demande:
**02.06.2021 Bulletin 2021/22**

(73) Titulaire: **Cailabs**
**35200 Rennes (FR)**

(72) Inventeurs:
• **JACQUARD, Clément**
**35000 Rennes (FR)**
• **LABROILLE, Guillaume**
**35000 Rennes (FR)**
• **PINEL, Olivier**
**35000 Rennes (FR)**

(74) Mandataire: **IP Trust**
**2, rue de Clichy**
**75009 Paris (FR)**

(56) Documents cités:
EP-A1- 2 469 221      WO-A1-2018/104725
FR-A1- 3 061 964      US-A1- 2017 010 463

• **GUILLAUME LABROILLE ET AL: "Efficient and mode selective spatial mode multiplexer based on multi-plane light conversion", OPTICS EXPRESS, vol. 22, no. 13, 30 juin 2014 (2014-06-30) , page 15599, XP055516035, US ISSN: 2161-2072, DOI: 10.1364/OE.22.015599**
• **J-F MORIZUR ET AL: "Programmable unitary spatial modes manipulation", ARXIV.ORG, CORNELL UNIVERSITY LIBRARY, 201 OLIN LIBRARY CORNELL UNIVERSITY ITHACA, NY 14853, 19 mai 2010 (2010-05-19), XP080477442, DOI: 10.1364/JOSAA.27.002524 cité dans la demande**

**Description**

**DOMAINE DE L'INVENTION**

La présente invention concerne un dispositif optique de traitement d'un rayonnement lumineux, par exemple de filtrage modal et/ou de mise en forme de ce faisceau lumineux, comprenant un dispositif de conversion de lumière multiplan.

**ARRIERE PLAN TECHNOLOGIQUE DE L'INVENTION**

Il existe de nombreuses applications où la mise en forme spatiale de faisceaux en espace libre peut être pertinente. Parmi ces applications, on peut citer :

- L'usinage, le perçage, la découpe de précision et le traitement de surface de matériaux par laser,
- L'imagerie et en particulier la microscopie,
- La détection par LIDAR,
- Les communications optiques en espace libre.

Tout dispositif de mise en forme spatiale d'un faisceau lumineux peut être sensible aux paramètres spatiaux de ce faisceau. En effet, la qualité de mise en forme spatiale d'un faisceau lumineux peut être altérée si les paramètres spatiaux du faisceau ne sont pas ceux qui ont été prévus lors de la conception du dispositif de mise en forme.
Lorsque les paramètres spatiaux d'un faisceau lumineux sont critiques, il est commun d'effectuer un filtrage d'amplitude sur le faisceau incident à l'aide d'un ou plusieurs diaphragmes et potentiellement d'un système optique imageant. Cette méthode convertit une variation de position et/ou de direction et/ou de taille du faisceau lumineux incident en une perte de puissance optique et en une déformation de ce faisceau. Bien que cette méthode présente l'avantage de la simplicité de mise en oeuvre, elle permet seulement de limiter partiellement les effets d'une variation de position et/ou de direction et/ou de taille du faisceau lumineux incident par rapport aux paramètres du faisceau tels qu'ils ont été supposés au moment de la conception du dispositif. De plus, la nature même du filtrage d'amplitude implique un coût initial en puissance optique.
On connaît de US9250454, WO2018/104725 et US2017010463 des dispositifs optiques de conversion de lumière multiplan, désignés par l'acronyme MPLC (Multi Plane Light Conversion selon l'expression anglo-saxonne), permettant de réaliser toute transformation spatiale unitaire d'un rayonnement lumineux.
D'un point de vue théorique, et comme cela a été établi dans « Programmable unitary spatial mode manipulation », Morizur et Al, J. Opt. Soc. Am. A/Vol. 27, No. 11/November 2010, une transformation spatiale unitaire peut effectivement être décomposée en une succession de transformations primaires, chaque transformation primaire affectant le profil de phase transverse du rayonnement lumineux. Dans la pratique, et sans que cela ne forme une limitation quelconque de cette technologie, les composants MPLC appliquent typiquement entre 3 à 25 transformations primaires.
La présente invention présente un dispositif de traitement d'un rayonnement lumineux, permettant par exemple le filtrage modal et/ou la mise en forme du rayonnement lumineux. Ce dispositif, mettant en oeuvre un dispositif MPLC, se distingue des méthodes connues basées sur des diaphragmes en ce qu'elle permet de traiter le faisceau d'entrée de façon plus complète tout en limitant les pertes de puissance optique.

**BREVE DESCRIPTION DE L'INVENTION**

L'objet de l'invention propose un dispositif de traitement d'un rayonnement lumineux tel que revendiqué dans la revendication 1.
Selon d'autres caractéristiques avantageuses et non limitatives de l'invention, prises seules ou selon toute combinaison techniquement réalisable :

- Le dispositif de traitement comprend un dispositif de transmission pour mettre en forme le rayonnement utile et former le faisceau de sortie ;

- le dispositif de traitement comprend une pluralité de dispositifs de blocage disposés respectivement dans une pluralité de plans de séparation dans lesquels on isole spatialement une partie du rayonnement de perturbation ;

- le dispositif de blocage comprend un élément optique absorbant, diffusant ou réfléchissant ;

- le dispositif de blocage est intégré au moins en partie dans le dispositif de conversion MPLC ;

- le dispositif de blocage comprend un élément de détection pour collecter une partie au moins du rayonnement de perturbation ;

- le dispositif de transmission comprend, disposé en aval du dispositif de conversion, un élément optique diffractif, un modulateur de phase spatiale, un système optique comprenant au moins une lentille, un axicon, un séparateur de faisceau et/ou un deuxième dispositif de conversion MPLC .

- le dispositif de transmission est intégré au moins en partie dans le dispositif de conversion MPLC.

- le dispositif de transmission comprend au moins un élément optique non sphérique et non plan, et de préférence entre 1 et 3 éléments optiques non sphériques et non plans.

- l'élément optique non sphérique et non plan est un élément optique réflectif.

- Le dispositif de traitement comprend également un dispositif de commande entre l'entrée optique et le dispositif de conversion MPLC.

- le dispositif de commande est un élément optique inactif ;

- le dispositif de traitement dans lequel les bases de modes d'entrée et de sortie sont à variables spatiales séparables.

## BREVE DESCRIPTION DES FIGURES

D'autres avantages et particularités de l'invention apparaîtront à la lecture de la description détaillée de mises en oeuvre et de modes de réalisation nullement limitatifs, au regard de dessins annexés sur lesquels :

- La figure 1 représente un premier exemple de mise en oeuvre d'un dispositif de traitement conforme à l'invention,
- La figure 2 est un graphique représentant la variation du recouvrement entre le mode du faisceau de sortie et le mode cible et de la puissance optique dans le faisceau de sortie en fonction de la direction du faisceau d'entrée,
- La figure 3 représente un deuxième exemple de mise en oeuvre d'un dispositif de traitement conforme à l'invention,
- La figure 4 illustre un exemple de décomposition modale d'un faisceau d'entrée conforme à l'invention,
- La figure 5 représente un dispositif de filtrage modal conforme à l'invention.

## DESCRIPTION DETAILLEE DE L'INVENTION

On désigne dans la présente description par « mode », un mode transverse vectoriel du champ électromagnétique, c'est-à-dire la donnée des distributions spatio-fréquentielle d'amplitude, de phase associées aux deux composantes spatiales transverses du mode.

Une base de modes est un ensemble de modes orthonormés du champ électromagnétique. En conséquence, la modification ou la transformation d'une base de modes désigne la modification ou la transformation spatio-fréquentielle d'au moins un des modes de la base de modes.

On définit le recouvrement entre deux modes comme le module au carré de l'intégrale dans un plan transverse du produit scalaire entre les deux modes.

On désigne par faisceau lumineux un champ électromagnétique constitué d'un mode ou d'une superposition de plusieurs modes.

On désigne par paramètres spatiaux du faisceau lumineux, les paramètres scalaires définissant les distributions d'amplitude et de phase associées au champ électromagnétique.

On peut citer comme exemple de paramètres spatiaux d'un faisceau lumineux, les paramètres suivants :

la direction de propagation du faisceau lumineux, définie par l'intermédiaire de la phase linéaire moyenne du champ électromagnétique associé ;
la position du faisceau lumineux, définie comme la position du centre de gravité de la distribution d'intensité du faisceau dans un plan perpendiculaire à la direction de propagation du faisceau ;
la taille horizontale ou verticale du faisceau lumineux, définie comme la déviation standard de la distribution d'intensité marginale horizontale ou verticale (ainsi que cela est bien définie par la norme internationale ISO) ;
l'ellipticité du faisceau ;

la divergence du faisceau, éventuellement anisotrope.

On considérera dans la présente description que les faisceaux lumineux sont polarisés selon une unique direction. Toutefois les principes exposés sont tout à fait applicables à un faisceau lumineux présentant plus d'une direction de polarisation. Ainsi, le déphasage spatial appliqué à un faisceau lumineux par un masque de phase dans le cadre de la description pourra s'exprimer plus généralement comme un déphasage spatio-fréquentiel, c'est à dire modifiant le déphasage selon les variables d'espace dans un plan transverse et selon la fréquence optique.

Par souci d'exhaustivité, on rappelle les principes de fonctionnement d'un dispositif de conversion de lumière multiplan, plus communément désigné par les termes anglo-saxons « Multi-Plane Light Converter » (MPLC). Dans un tel dispositif, un faisceau lumineux incident subit une succession de réflexions et/ou de transmissions, chaque réflexion et/ou transmission étant suivie par une propagation du faisceau en espace libre. Certaines au moins des pièces optiques sur lesquelles s'opèrent les réflexions et/ou les transmissions, généralement en des emplacements successifs distincts, et qui guident la propagation du faisceau incident, présentent une surface microstructurée qui modifie la phase du faisceau lumineux incident pour lui impartir une fonction optique prédéterminée. On prévoit ainsi généralement au moins 4 réflexions et/ou transmissions, comme par exemple 8, 10, 12, 14, voire au moins 20 réflexions et/ou transmissions. Avantageusement, la forme du rayonnement lumineux incident et du rayonnement lumineux modifiés sont différentes l'une de l'autre.

Par « surface microstructurée » on signifie que la surface de la pièce optique peut présenter un relief, par exemple sous la forme de « pixels » dont les dimensions sont comprises entre quelques microns à quelques centaines de microns. Chaque pixel présente une élévation, par rapport à un plan moyen définissant la surface en question, d'au maximum quelques microns ou d'au minimum quelques millièmes de microns. Une pièce optique présentant une telle surface microstructurée forme un masque de phase introduisant des déphasages locaux au sein de la section transverse du faisceau lumineux qui s'y réfléchit ou qui s'y transmet.

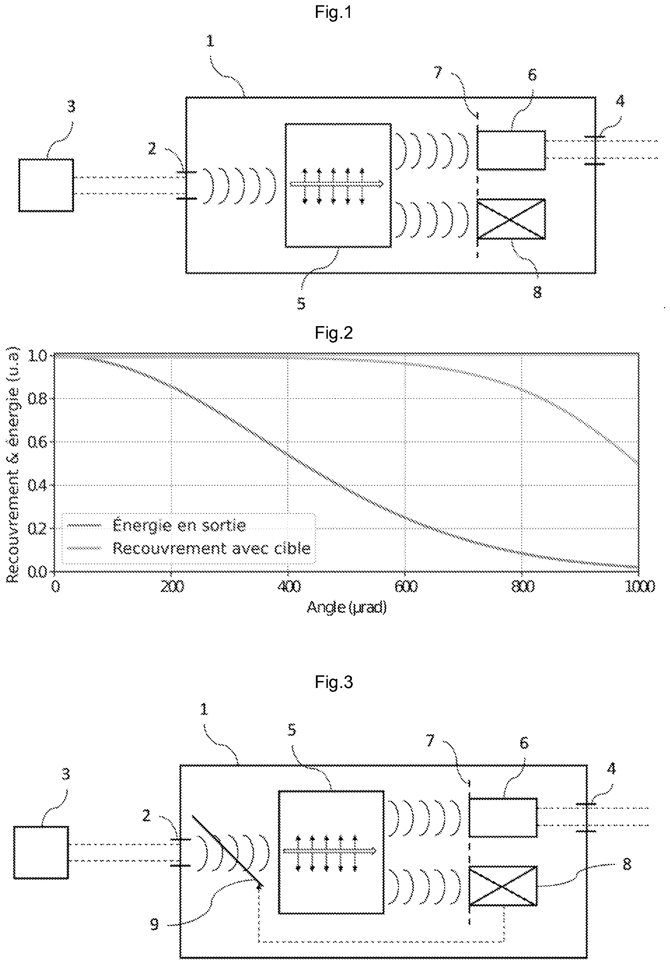

On a représenté sur la figure 1 un exemple de mise en oeuvre d'un dispositif de traitement 1 conforme à l'invention.

Un tel dispositif 1 possède une entrée optique 2 pour recevoir un faisceau lumineux d'entrée issu d'une source optique 3 et pour propager dans le dispositif 1 un rayonnement d'entrée, et une sortie optique 4 pour émettre un faisceau lumineux de sortie. Sur la représentation de la figure 1, l'entrée et la sortie optique 2, 4 sont constitués d'un simple passage permettant la propagation en espace libre des faisceaux, mais on pourrait prévoir que cette entrée et cette sortie soit l'une et/ou l'autre formée d'un connecteur ou d'un étage optique, permettant par exemple de coupler le dispositif 1 à au moins une fibre optique d'entrée et/ou de sortie.

Le dispositif de traitement 1 comprend un dispositif de conversion de lumière multiplan MPLC 5 qui permet d'assurer un filtrage modal du faisceau d'entrée, c'est-à-dire de séparer et/ou d'extraire du faisceau d'entrée des composantes modales non souhaitées. Le faisceau de sortie correspond donc, à minima, au faisceau d'entrée filtré de composante modales non souhaitées. Le faisceau de sortie présente des paramètres choisis à l'avance (prédéterminés) et ceux-ci sont susceptibles d'être différents des paramètres du faisceau d'entrée. Le dispositif MPLC 5 peut être éventuellement complété par un élément quelconque de mise en forme du faisceau 6, également désigné sous le terme de dispositif de transmission 6, une fois le filtrage effectué.

D'une manière générale, un MPLC permet de transformer une base de modes d'entrée en une base de modes de sortie. Pour concevoir un MPLC, il est donc nécessaire de définir ces deux bases. Pour implémenter un filtrage modal, la base d'entrée est déterminée à partir d'un faisceau lumineux d'entrée supposé (ou nominal). La base de modes de sortie du MPLC est déterminée par le faisceau lumineux souhaité en sortie du dispositif et par la nature du moyen d'extraction de la puissance optique des composantes modales non souhaitées. On désignera le mode du rayonnement lumineux souhaité (ou « utile ») en sortie du dispositif MPLC 5 comme le mode cible.

A titre d'exemple, on pourra suivre la procédure suivante pour déterminer la base de modes d'entrée du MPLC, lorsque le faisceau d'entrée supposé est monomode :

- définir un mode d'entrée supposé, le mode le plus proche possible du mode du faisceau d'entrée qui sera effectivement utilisé,
- construire une famille de modes à partir du mode d'entrée supposé dont on fait varier au moins un des paramètres spatiaux,
- construire une base de modes à partir de la famille de modes en utilisant une décomposition en valeurs singulières,
- déterminer un premier mode de la base, comme le mode de la base ayant un recouvrement maximal avec le mode d'entrée supposé,
- compléter le premier mode avec les modes obtenus lors de la décomposition en valeurs singulières puis appliquer un procédé d'orthonormalisation de ces modes pour former la base d'entrée.

Si le faisceau d'entrée est produit par une source optique multimode 3, par exemple par le biais d'une fibre multimode, on peut construire la base d'entrée du MPLC 5 à partir des modes de la source plutôt que par le procédé décrit plus haut. Le mode d'entrée supposé est alors la composante modale du faisceau d'entrée supposé comportant le plus de puissance optique.

Dans tous les cas, la base de modes d'entrée est composée de modes qui ne sont pas entièrement spatialement disjoint.

On connaît du document « Quantum measurements of spatial conjugate variables: displacement and tilt of a Gaussian beam », V. Delaubert, Optics Letters, Vol. 31, Issue 10, pp. 1537-1539, (2006) (https://www.osapublishing. org/ol/abstract.cfm?uri=ol-31-10-1537), que dans la limite de variations faibles d'un paramètre physique d'intérêt, (par exemple, mais pas exclusivement, la direction et/ou la position d'un faisceau lumineux), une partie de l'énergie du faisceau lumineux est transférée vers le ou les modes d'ordres supérieurs. Ainsi, dans le cas d'un mode d'entrée supposé gaussien, on pourrait décider d'utiliser une base d'entrée de Hermite-Gauss dont le premier mode est le mode gaussien d'entrée supposé.

Pour déterminer la base de modes de sortie du MPLC 5, on choisit une base pour laquelle il existe un plan, appelé plan de séparation dans la présente description, dans lequel les modes de sortie autres que le mode cible sont suffisamment disjoints spatialement du mode cible pour que ces modes de sortie puissent être bloqués, par exemple par un élément optique absorbant ou diffusant, ou déviés par un élément optique réfléchissant, étant entendu que le mode cible subisse une perte d'énergie arbitrairement basse. Par exemple, on pourrait utiliser des modes de sorties gaussiens, suffisamment séparés spatialement pour que leur recouvrement soit nul deux à deux et répartis de façon linéaire dans le plan séparation, en triangle ou en rectangle.

Le MPLC 5 d'un dispositif 1 conforme à la présente description est configuré pour transformer la base de modes d'entrée en la base de mode de sortie en assurant notamment que le mode d'entrée supposé soit transformé en le mode cible

L'élément optique bloquant, diffusant ou réfléchissant (ou plus généralement le dispositif de blocage 8) peut être intégré au dispositif 1 de l'invention. Il peut notamment être intégré au MPLC 5, ou séparé physiquement de celui-ci, comme cela est le cas sur la représentation schématique de la figure 1. Le MPLC 5 peut notamment être assorti d'un élément de détection permettant de collecter les modes de sortie du MPLC 5 associés aux modes de perturbations du faisceau lumineux incident en vue de leur détection totale ou partielle.

Dans le cas d'un faisceau d'entrée particulier, correspondant à un faisceau d'entrée supposé dont un au moins des paramètres spatiaux aurait été modifié, le MPLC 5 effectue une projection, au sens mathématique du terme, de ce faisceau particulier sur la base de ses modes d'entrée. La puissance optique dans chaque mode d'entrée du MPLC 5 est transférée vers le mode de sortie associé. En l'absence d'une variation de l'un au moins des paramètres spatiaux, la totalité de la puissance optique du faisceau lumineux d'entrée particulier (qui correspond alors au faisceau d'entrée supposé) est transférée par le MPLC vers le mode cible. En cas de variation des paramètres spatiaux, la part de puissance optique du faisceau lumineux d'entrée particulier dans le mode d'entrée supposé, désignée comme la puissance utile, est transférée par le MPLC 5 du mode d'entrée supposé vers le mode cible sous forme de rayonnement utile. La part de puissance optique du faisceau lumineux d'entrée particulier dans les autres modes de la base, désignée comme la puissance non-utile, est transférée par le MPLC 5 vers les modes de sortie, orthogonaux au mode cible sous forme de rayonnement de perturbation. Dit autrement, le MPLC est configuré pour spatialement séparer, dans un plan de séparation 7, le rayonnement d'entrée en un rayonnement utile, dans un mode cible, qui se propage vers la sortie optique 4 et en un rayonnement de perturbation.

La part de puissance optique dans les modes de sortie du MPLC 5 orthogonaux au mode cible, c'est-à-dire le rayonnement de perturbation, peut alors être bloquée par le dispositif de blocage 8, formé par exemple d'un élément optique absorbant, diffusant, ou par un quelconque élément optique de collection en vue d'une détection totale ou partielle.

Le MPLC 5 constitue ainsi un filtre modal passif où, dans la limite de petites variations des paramètres spatiaux, la puissance optique du faisceau lumineux qui est en dehors du mode d'entrée supposé est totalement extraite. Le dispositif 1 prévoit ainsi, un dispositif de blocage 8 du rayonnement de perturbation, disposé dans le plan de séparation, pour que ce rayonnement ne se propage pas vers la sortie optique 4 du dispositif et qu'il ne contribue pas au faisceau de sortie. Comme on l'a vue, ce dispositif de blocage 8 peut comprendre un élément optique bloquant, diffusant et/ou réflectif.

Dans un mode de mise en oeuvre particulier, la puissance optique dans le mode cible en sortie du MPLC 5, c'est-à-dire le rayonnement utile, peut être dirigée, au sein du dispositif de traitement 1 vers un autre élément optique 6, désigné sous le terme de dispositif de transmission 6 dans la présente description, réalisant une mise en forme de faisceau lumineux. Cet élément optique 6 peut être par exemple, mais non exclusivement :

- un autre dispositif MPLC,
- un élément optique diffractif (DOE pour Diffractive Optical Element selon l'expression anglo-saxonne),
- un modulateur de phase spatiale (SLM pour Spatial Light Modulator selon l'expression anglo-saxonne),
- un système optique imageant ou comportant au moins une lentille,

- un axicon,
- au moins un élément optique, transmissif ou réflectif, non sphérique et non plan, tel qu'un élément optique asphérique ou de forme libre (de la traduction de l'expression anglo-saxonne « freeform optics »).

Dans un mode de mise en oeuvre particulièrement avantageux, la mise en forme du faisceau réalisé par le dispositif de transmission 6 peut être mise en oeuvre au moins en partie par un autre MPLC. Dans ce cas, il est possible de concevoir un MPLC implémentant successivement ou simultanément la fonction de filtrage modal d'un faisceau lumineux et la fonction de mise en forme de ce même faisceau lumineux, ou d'une partie de cette mise en forme.

Le mode cible (constituant le rayonnement utile) et les autres modes (constituant le rayonnement de perturbation) peuvent ne pas être tous séparables dans un unique plan de séparation. Dans cette situation, on peut prévoir une pluralité de plans de séparation, distants les uns des autres d'un espace de propagation, dans lesquels on peut successivement isoler une partie des autres modes contribuant au rayonnement de perturbation. On prévoira dans ce cas une pluralité de dispositifs de blocage 8 qu'on disposera respectivement dans les plans de séparation, afin de bloquer la part du rayonnement de perturbation spatialement isolée dans chaque plan.

On démontre dans les paragraphes suivants l'intérêt de l'invention en détaillant une implémentation concrète du filtrage modal d'un faisceau lumineux et, éventuellement, de sa mise en forme spatiale.

Exemple 1

On souhaite stabiliser un faisceau lumineux d'entrée dont le profil spatial transverse est gaussien de diamètre 1 mm et qui est susceptible de connaître une variation de sa direction de propagation. Le mode de ce faisceau lumineux, sans variation de la direction de propagation, définit le mode d'entrée supposé du MPLC 5.

On décide ici d'utiliser une base de Hermite-Gauss de trois modes seulement comme base d'entrée. Il y a deux modes d'ordre supérieur associés à la variation de direction du faisceau d'entrée, un pour chaque direction orthogonale du plan transverse à la propagation du faisceau.

Les modes de sortie du MPLC 5 sont déterminés par le faisceau lumineux souhaité en sortie 2 du dispositif 1. Pour des raisons de simplicité, mais sans restreindre la généralité du dispositif, on choisit ici un faisceau lumineux en sortie constitué d'un mode cible identique au mode d'entrée, c'est à dire un faisceau lumineux dont le profile spatial transverse est gaussien de diamètre 1 mm. En d'autres termes, le dispositif 1 de cet exemple ne comprend pas de dispositif de transmission 6 pour mettre en forme le faisceau de sortie.

Pour les deux modes de sortie complémentaires au mode cible, c'est-à-dire les modes de la base de sortie du MPLC associés aux modes d'ordre supérieur de la base d'entrée, on choisit deux modes identiques au mode cible mais séparés spatialement de 1,5 mm (soit 150% du diamètre du mode cible), les trois modes de sorties étant disposés aux coins d'un triangle isocèle. Cette valeur arbitraire mais commune garantit que le recouvrement entre les modes de sortie du MPLC est inférieur à 0,02% de leur énergie.

Une fois les bases d'entrée et de sortie du MPLC 5 déterminées, on peut générer numériquement les masques de phase du MPLC grâce au procédé décrit par exemple dans US9250454. On choisit d'utiliser ici 5 masques de phase. La lame de phase implémentant ces masques de phase peut être fabriquée par exemple à partir de techniques de photolithographie. Une fois la lame de phase fabriquée, elle est assemblée aux autres composants optiques d'un MPLC, par exemple à un miroir qui lui fait face pour former une cavité multi passage, dans lequel se propage le rayonnement incident pour opérer la transformation choisie. La distance choisie entre la lame de phase et le miroir peut être ici de l'ordre de 20 cm.

Dans le plan de séparation où les modes de sortie du MPLC 5 sont séparés spatialement, on place un dispositif de blocage 8 formé d'un diaphragme de diamètre 1,5mm (soit 150% du diamètre du mode cible) centré sur le mode cible. La valeur choisie pour le diamètre du diaphragme assure qu'environ plus de 98,9% de l'énergie du mode cible est transmise alors que moins d'environ 0,1% de l'énergie des autres modes de sortie du MPLC est transmise.

Pour évaluer les performances du dispositif 1, on introduit dans une simulation numérique de ce dispositif, une variation de direction du faisceau lumineux d'entrée du dispositif et on évalue après le diaphragme deux quantités physiques d'intérêt

- Le recouvrement entre le mode du faisceau lumineux de sortie et le mode cible,
- La puissance optique dans le faisceau lumineux de sortie.

Les résultats sont présentés sur la figure 2. On fait les constatations suivantes :

- le recouvrement entre le mode du faisceau lumineux de sortie et le mode cible reste constant sur une plage angulaire du faisceau particulier d'entrée non nulle,
- La puissance optique dans le faisceau lumineux de sortie chute lorsque l'écart angulaire augmente.

Ces deux constatations démontrent que le dispositif conforme à l'invention permet de conserver un recouvrement constant entre le mode du faisceau lumineux de sortie et le mode cible sur une large plage de variation d'un paramètre du faisceau lumineux d'entrée, au prix d'une perte de puissance optique sur le faisceau de sortie. Cette perte de puissance optique correspond exactement à la puissance optique qui est sortie du mode à stabiliser pour peupler les modes de perturbations et constitue une limite fondamentale indépassable sans un dispositif actif.

La capacité d'un dispositif conforme à la présente invention à maintenir, de manière passive, la constance du mode du faisceau lumineux de sortie constitue une innovation importante dans le domaine du filtrage modal de faisceau lumineux.

Dans l'exemple qui vient d'être présenté, un mode cible gaussien a été choisi, mais on peut tout à fait envisager un mode cible dont l'intensité correspond, après propagation en espace libre ou non, à par exemple :

- un faisceau à plateau plat (« Flat Top ») carré ou rectangulaire ;
- un faisceau à plateau plat (« Flat Top ») circulaire ;
- un faisceau de Bessel ;
- un faisceau à plateau en forme de ligne (produit d'un plateau plat selon une première direction et d'une gaussienne selon une direction perpendiculaire à la première) ;
- un faisceau en forme d'anneau.

Pour faciliter la mise en forme du rayonnement utile issu du dispositif MPLC 5 et former un faisceau selon l'une des formes données en exemple ci-dessus, on peut compléter le dispositif MPLC 5 d'un dispositif de transmission 6 comprenant au moins un élément optique non sphérique et non plan, et préférentiellement entre 1 et 3 de ces éléments. Par « élément optique non sphérique et non plan », on désigne un élément optique, transmissif ou réflectif, dont les surfaces ne sont ni sphériques, ni planes. Il peut par exemple s'agir d'un élément optique asphérique (qui présente généralement une symétrie de révolution autour d'un axe perpendiculaire à son plan moyen) ou d'un élément optique à forme libre (qui ne présente pas de symétrie de révolution ou de translation autour d'un axe perpendiculaire à son plan moyen).

D'une manière très générale, un faible nombre de tels éléments optiques non sphériques et non plan, de 1 à 3, permette de façonner le rayonnement utile en une grande variété de forme de faisceau, en particulier ceux donnés en exemple ci-dessus, et qui trouvent un intérêt tout particulier dans les applications d'usinage, de perçage, de découpe de précision et de traitement de surface de matériaux par laser.

En combinant le dispositif MPLC 5 avec un dispositif de transmission 6 configuré avec de tels éléments optiques, on simplifie la conception du dispositif MPLC 5, et notamment le nombre de masques de phases, en réalisant la partie « mise en forme » du rayonnement utile par un système optique plus conventionnel.

Avantageusement, ces éléments optiques seront réflectifs car ils présentent une dispersion chromatique inférieure et une tenue en puissance supérieure à un élément optique transmissif, ce qui est particulièrement important dans les applications mettant en oeuvre de la puissance ou des lasers aux impulsions dont la durée est de l'ordre de la dizaine de femtosecondes.

Un premier cas d'usage d'un dispositif conforme à l'invention est la stabilisation d'un faisceau dont un au moins des paramètres spatiaux n'est pas constant dans le temps. Le dispositif conforme à l'invention permet alors de produire un faisceau dont les paramètres spatiaux sont stables dans le temps et dont la puissance optique fluctue avec les variations de ces paramètres.

Un deuxième cas d'usage d'un dispositif conforme à l'invention est celui où on ne dispose pas d'un faisceau d'entrée dont les paramètres spatiaux sont rigoureusement ceux du faisceau d'entrée supposé, c'est à dire qui a été utilisé lors la conception du dispositif. Cela permet de produire un faisceau dont les paramètres spatiaux sont fixés à la conception et ne dépendent pas d'une connaissance absolue du faisceau d'entrée. En d'autres termes, le dispositif permet d'être robuste à une variabilité statistique du faisceau d'entrée qui peut varier d'une implémentation à l'autre ou d'une source optique 3 à l'autre.

Le dispositif permet de séparer la puissance utile de la puissance non-utile, c'est-à-dire le rayonnement utile du rayonnement de perturbation. Il peut être particulièrement intéressant d'optimiser les paramètres spatiaux du faisceau lumineux d'entrée en respectivement maximisant et/ou minimisant respectivement la puissance utile et/ou la puissance non-utile. On peut utiliser un dispositif de commande 9 actif (des miroirs motorisés, ou un dispositif acousto-optique par exemple) ou non actif (miroirs avec monture opto-mécanique) disposé en amont du dispositif MPLC. Dans le cas de l'utilisation de dispositifs d'alignement actifs, on ajuste leurs paramètres par l'intermédiaire d'une boucle de rétroaction dont l'un au moins des paramètres d'entrée serait les mesures totales ou partielles des puissances utiles et/ou non-utiles. Une telle configuration est représentée sur la figure 3, permettant par l'intermédiaire du dispositif de commande 9, de modifier le faisceau d'entrée pour par exemple chercher à réduire l'énergie du rayonnement de perturbation collecté au niveau du dispositif de blocage 8.

Exemple 2

Dans un deuxième exemple d'application, le filtrage modal peut être combiné à une mise en forme spécifique du rayonnement utile par le dispositif de transmission 6 pour implémenter un dispositif séparateur de faisceau. Un tel dispositif produit un faisceau de sortie constitué d'une superposition cohérente de faisceaux lumineux monomodes dont les lobes d'amplitude sont disjointes dans un plan de l'espace. Dans une configuration particulièrement avantageuse, ces faisceaux lumineux monomodes correspondent chacun à des copies d'un faisceau lumineux de référence, et ne diffèrent que par leur position et éventuellement leur direction de propagation. Le faisceau lumineux de référence est constitué du mode cible dont la distribution d'intensité transverse, une fois le mode éventuellement propagé en espace libre dans un nouveau plan de l'espace, peut être celle d'un faisceau à plateau plat carré ou circulaire, ou d'un faisceau de Bessel ou d'un faisceau gaussien. Ce dispositif 1 conforme à l'invention dans lequel le dispositif de transmission 6 comprend un séparateur de faisceau implémente donc une fonction optique de séparation de faisceaux robuste à une variation des paramètres spatiaux du faisceau d'entrée.

Exemple 3

Un faisceau lumineux peut être employé pour usiner une pièce avec une très grande précision. Il n'est pas toujours possible de positionner mécaniquement le faisceau dans l'espace avec cette très grande précision. Les tolérances de fabrication des éléments composant l'équipement d'usinage, les dérives et les mouvements parasites (vibrations) que peut subir l'équipement peuvent introduire des décalages dans la position occupée par la source laser et donc affecter la forme du faisceau qui attaque la pièce à usiner.

Un dispositif de traitement 1 conforme à l'invention permet de résoudre ce problème. Le MPLC 5 de ce dispositif 1 peut être conçu en choisissant des bases de modes d'entrée/sortie à variables spatiales séparables. Une telle décomposition est décrite dans « Fabrication and Characterization of a Mode-selective 45-Mode Spatial Multiplexer based on Multi-Plane Light Conversion », Bade et al, Optical Fiber Communication Conférence Postdeadline Papers, OSA Technical Digest, Optical Society of America, 2018, paper Th4B.3, pp. 1-3 et la demande de brevet français FR1851664. Ces documents démontrent qu'une telle décomposition permet une réduction du nombre de masques de phase constituant le dispositif de conversion MPLC.

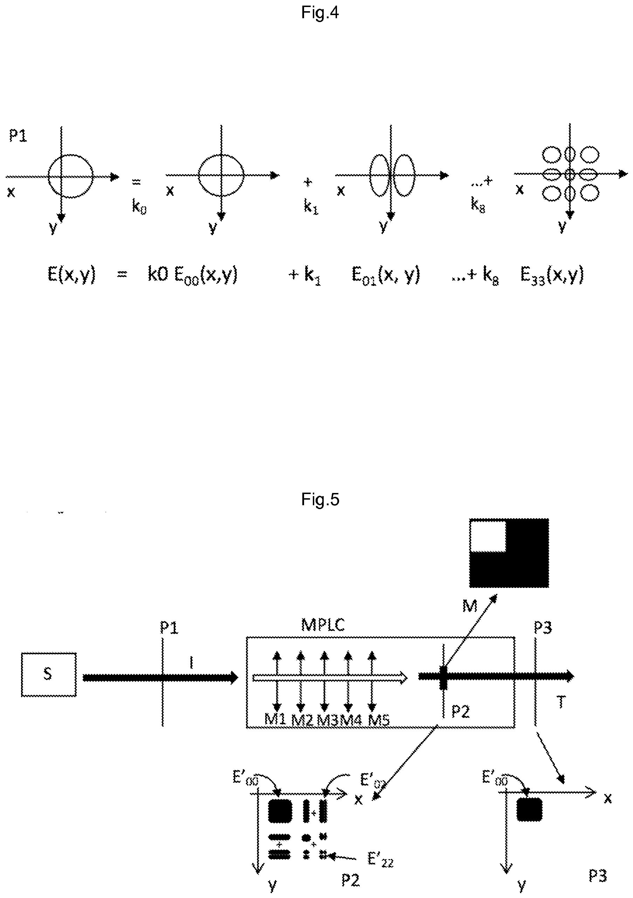

On considère dans cet exemple que la source 3 est censée émettre un faisceau lumineux d'entrée dont la forme est gaussienne, centré au point (0, 0) d'un repère cartésien d'un premier plan transverse P1 au faisceau d'entrée. Comme on l'a précisé, la position exacte du faisceau d'entrée dans ce premier plan est susceptible d'être imparfaite ou de varier dans le temps, par rapport à sa position attendue, centrée sur le repère du plan. Quelle que soit la position exacte de ce faisceau à un instant déterminé, et comme cela est représenté sur la figure 4, la forme E(x, y) du faisceau dans le premier plan P1 peut se décomposer modalement sous la forme d'un développement limité :

$$E(x, y) = k_0 E_{00}(x,y) + k_1 E_{01}(x,y) + k_2 E_{02}(x,y) + k_3 E_{10}(x,y) + k_4 E_{11}(x,y) + k_5 E_{12}(x,y) + k_6 E_{20}(x,y) + k_7 E_{21}(x,y) + k_8 E_{22}(x,y)$$

où $E_{00}$ est un mode gaussien centré en (0,0), $E_{01}$ à $E_{22}$ les 8 premiers modes d'Hermite Gauss $HG_{01}$ à $HG_{22}$ également centrés en (0,0), et k0 à k8 les coefficients de décomposition modal du développement limité.

Les modes $E_{00}$ à $E_{22}$ forment la première famille de mode à variables séparables. Ils sont tous superposés spatialement.

On définit également une deuxième famille de modes, dans un deuxième plan transverse P2 formant le plan de séparation 7 disposé en aval de la conversion et muni lui également d'un repère cartésien (x, y). Cette deuxième famille est composée d'un mode principal $E'_{00}(x, y)$ « top hat », et de huit modes de perturbation $E'_{01}(x,y)$ à $E'_{22}(x,y)$. Ces 9 modes sont spatialement disjoints et disposés en forme de carré dans le deuxième plan. Ils forment bien une famille à variables séparables, comme cela est représenté sur la figure 5.

Pour résoudre le problème posé, on configure le dispositif de conversion MPLC 5 pour que la transformation modale du rayonnement d'entrée conduise à transformer chaque mode $E_{ij}(x, y)$ du premier plan dans le mode $E'_{ij}(x, y)$ du deuxième plan, c'est-à-dire transformer chaque mode de la première famille dans le mode de même indice de la deuxième famille. De la sorte, quelle que soit la position exacte du faisceau lumineux d'entrée, la partie correspondant au premier mode gaussien $E_{00}(x, y)$ est transformé dans le mode « top hat » $E'_{00}(x, y)$. Les autres parties du rayonnement d'entrée, se projetant dans les autres modes de la première famille, sont transformées dans les autres modes de la deuxième famille qui sont tous spatialement séparés du premier mode $E'_{00}(x, y)$. On peut ainsi placer un masque M (formant le dispositif de blocage 8) en sortie du dispositif de conversion MPLC, après la transformation opérée par les masques de phase et au niveau du plan de séparation 7, visant à bloquer la propagation de cette partie du rayonnement transformé, de manière à ce que seule la partie correspondant au premier mode $E'_{00}(x, y)$ se propage, comme cela est bien visible sur la figure 5, dans la représentation transverse d'un troisième plan P3 en aval du masque M.

Comme cela a été décrit précédemment, l'utilisation d'une décomposition en variables séparables permet de prévoir un nombre limité de masques de phase du dispositif de conversion MPLC pour mettre en oeuvre la transformation modale qui vient d'être décrite. On peut par exemple configurer le MPLC pour qu'il comprenne cinq masques de phase, c'est-à-dire cinq réflexions ou transmissions du rayonnement d'entrée imposant un déphasage spatial du rayonnement. Et on recherche numériquement les profils de chacun des masques de phase conduisant à précisément transformer la première famille de modes dans le mode de même couple d'indices de la deuxième famille de modes. Cette recherche peut se poser comme un problème d'optimisation numérique (dont on trouvera une description détaillée dans l'état de la technique cité), et la séparabilité des variables de la première et deuxième famille de modes permet de faire converger efficacement ce problème vers une solution présentant un bon degré d'optimalité, même lorsque le nombre de masques de phase est réduit, cinq dans l'exemple pris.

Bien entendu l'invention n'est pas limitée au mode de mise en oeuvre décrit et on peut y apporter des variantes de réalisation sans sortir du cadre de l'invention tel que défini par les revendications.

Il peut notamment exister une multitude de plans transverses dans lequel le rayonnement utile et le rayonnement de perturbation sont spatialement séparés. On pourra dans ce cas placer le dispositif de blocage 8 dans l'un au moins de ces plans, ou répartir les éléments optiques composant le dispositif de blocage 8 dans une pluralité de tels plans.

Dans le cas où le faisceau d'entrée est constitué d'impulsions femtosecondes (de 10 à 900 fs), le dispositif de traitement 1 devient particulièrement pertinent de part :

- sa compatibilité avec des faisceaux lumineux de spectres optiques larges,
- sa compatibilité avec des faisceaux dont les énergies par impulsion sont importantes,
- la robustesse qu'il procure aux changements des paramètres, spatiaux du faisceau d'entrée,
- le faible nombre d'éléments optiques qui composent le dispositif assure la stabilité des paramètres spatiaux des faisceaux produits.

**Revendications**

1. Dispositif de traitement (1) d'un rayonnement lumineux comprenant :

    - une entrée optique (2) pour recevoir un faisceau d'entrée issu d'une source optique (3) et pour propager dans le dispositif (1) un rayonnement d'entrée, ledit rayonnement d'entrée pouvant être décrit dans une base de modes optiques, dite base de modes d'entrée, et qui ne sont pas entièrement spatialement disjoints ;
    - une sortie optique (4) pour émettre un faisceau de sortie ;
    - un dispositif de conversion MPLC (5) disposé entre l'entrée optique (2) et la sortie optique (4), et configuré pour transformer la base de modes d'entrée en une base de modes de sortie, tout en assurant qu'un mode d'entrée particulier, dit mode d'entrée supposé, soit transformé en un mode de sortie particulier, dit mode cible, le dispositif de conversion MPLC (5) est en outre configuré pour spatialement séparer, dans un plan de séparation (7), le rayonnement d'entrée en un rayonnement utile, décrit par le mode cible, qui se propage vers la sortie optique (4) et en un rayonnement de perturbation décrit par les modes de sortie autres que le mode cible ;
    - au moins un dispositif de blocage (8) du rayonnement de perturbation, disposé dans le plan de séparation (7) pour qu'il ne contribue pas au faisceau de sortie.

2. Dispositif de traitement (1) selon la revendication précédente comprenant un dispositif de transmission (6) pour mettre en forme le rayonnement utile et former le faisceau de sortie.

3. Dispositif de traitement (1) selon l'une des revendications précédentes comprenant une pluralité de dispositifs de blocage (8) disposés respectivement dans une pluralité de plans de séparation (7) dans lesquels on isole spatialement une partie du rayonnement de perturbation.

4. Dispositif de traitement (1) selon l'une des revendications précédentes dans lequel le dispositif de blocage (8) comprend un élément optique absorbant, diffusant ou réfléchissant.

5. Dispositif de traitement (1) selon l'une des revendications précédentes dans lequel le dispositif de blocage (8) est intégré au moins en partie dans le dispositif de conversion MPLC (5).

6. Dispositif de traitement (1) selon l'une des revendications précédentes dans lequel le dispositif de blocage (8) comprend un élément de détection pour collecter une partie au moins du rayonnement de perturbation.

**7.** Dispositif de traitement (1) selon l'une des revendications 2 à 6 dans lequel le dispositif de transmission (6) comprend, disposé en aval du dispositif de conversion (5), un élément optique diffractif, un modulateur de phase spatiale, un système optique comprenant au moins une lentille, un axicon, un séparateur de faisceau et/ou un deuxième dispositif de conversion MPLC.

**8.** Dispositif de traitement (1) selon l'une des revendications 2 à 7 dans lequel le dispositif de transmission (6) est intégré au moins en partie dans le dispositif de conversion MPLC (5).

**9.** Dispositif de traitement (1) selon l'une des revendications 2 à 7 dans lequel le dispositif de transmission (6) comprend au moins un élément optique non sphérique et non plan, et de préférence entre 1 et 3 éléments optiques non sphériques et non plans.

**10.** Dispositif de traitement (1) selon la revendication précédente dans lequel l'élément optique non sphérique et non plan est un élément optique réflectif.

**11.** Dispositif de traitement (1) selon l'une des revendications précédentes comprenant également un dispositif de commande (9) entre l'entrée optique (2) et le dispositif de conversion MPLC (5).

**12.** Dispositif de traitement (1) selon la revendication précédente dans lequel le dispositif de commande (9) est un élément optique inactif.

**13.** Dispositif de traitement (1) selon l'une des revendications précédentes dans lequel les bases de modes d'entrée et de sortie sont à variables spatiales séparables.


**Patentansprüche**

**1.** Vorrichtung (1) zum Verarbeiten von Lichtstrahlung, umfassend:

- einen optischen Eingang (2) zum Empfangen eines Eingangsstrahls von einer optischen Quelle (3) und zum Ausbreiten eines Eingangsstrahls in der Vorrichtung (1), wobei der Eingangsstrahl in einer Basis von optischen Modi beschrieben werden kann, der sogenannten Eingangsmodibasis, und die räumlich nicht vollständig voneinander abgetrennt sind;
- einen optischen Ausgang (4) zum Emittieren eines Ausgangsstrahls;
- eine MPLC-Umwandlungsvorrichtung (5), die zwischen dem optischen Eingang (2) und dem optischen Ausgang (4) angeordnet ist und ausgelegt ist, um die Basis von Eingangsmodi in eine Basis von Ausgangsmodi umzuwandeln, während sichergestellt wird, dass ein bestimmter Eingangsmodus, der als angenommener Eingangsmodus bezeichnet wird, in einen bestimmten Ausgangsmodus, der als Zielmodus bezeichnet wird, transformiert wird, wobei die MPLC-Umwandlungsvorrichtung (5) ferner ausgelegt ist, um in einer Trennebene (7) die Eingangsstrahlung räumlich in eine Nutzstrahlung, die durch den Zielmodus beschrieben wird, die sich in Richtung des optischen Ausgangs (4) ausbreitet, und in eine Störstrahlung, die durch die anderen Ausgangsmodi als den Zielmodus beschrieben wird, zu trennen;
- mindestens eine Vorrichtung (8) zum Blockieren der Störstrahlung, die in der Trennebene (7) angeordnet ist, so dass sie nicht zu dem Ausgangsstrahl beiträgt.

**2.** Verarbeitungsvorrichtung (1) nach dem vorstehenden Anspruch, umfassend eine Übertragungsvorrichtung (6) zum Bilden der Nutzstrahlung und Bilden des Ausgangsstrahls.

**3.** Verarbeitungsvorrichtung (1) nach einem der vorstehenden Ansprüche, umfassend eine Vielzahl von Blockiervorrichtungen (8), die jeweils in einer Vielzahl von Trennebenen (7) angeordnet sind, wobei ein Teil der Störstrahlung räumlich isoliert wird.

**4.** Verarbeitungsvorrichtung (1) nach einem der vorstehenden Ansprüche, wobei die Blockiervorrichtung (8) ein absorbierendes, diffundierendes oder reflektierendes optisches Element umfasst.

**5.** Verarbeitungsvorrichtung (1) nach einem der vorstehenden Ansprüche, wobei die Blockiervorrichtung (8) mindestens teilweise in die MPLC-Umwandlungsvorrichtung (5) integriert ist.

6. Verarbeitungsvorrichtung (1) nach einem der vorstehenden Ansprüche, wobei die Blockiervorrichtung (8) ein Detektionselement zum Sammeln mindestens eines Teils der Störstrahlung umfasst.

7. Verarbeitungsvorrichtung (1) nach einem der Ansprüche 2 bis 6, wobei die Übertragungsvorrichtung (6) stromabwärts der Umwandlungsvorrichtung (5) angeordnet ein diffraktives optisches Element, einen räumlichen Phasenmodulator, ein optisches System, umfassend mindestens eine Linse, ein Axikon, einen Strahlteiler und/oder eine zweite MPLC-Umwandlungsvorrichtung, umfasst.

8. Verarbeitungsvorrichtung (1) nach einem der Ansprüche 2 bis 7, wobei die Übertragungsvorrichtung (6) mindestens teilweise in die MPLC-Umwandlungsvorrichtung (5) integriert ist.

9. Verarbeitungsvorrichtung (1) nach einem der Ansprüche 2 bis 7, wobei die Übertragungsvorrichtung (6) mindestens ein nicht kugelförmiges und nicht ebenes optisches Element und bevorzugt zwischen 1 und 3 nicht kugelförmige und nicht ebene optische Elemente umfasst.

10. Verarbeitungsvorrichtung (1) nach dem vorstehenden Anspruch, wobei das nicht kugelförmige und nicht ebene optische Element ein reflektierendes optisches Element ist.

11. Verarbeitungsvorrichtung (1) nach einem der vorstehenden Ansprüche, umfassend zudem eine Steuervorrichtung (9) zwischen dem optischen Eingang (2) und der MPLC-Umwandlungsvorrichtung (5).

12. Verarbeitungsvorrichtung (1) nach dem vorstehenden Anspruch, wobei die Steuervorrichtung (9) ein inaktives optisches Element ist.

13. Verarbeitungsvorrichtung (1) nach einem der vorstehenden Ansprüche, wobei die Eingangs- und Ausgangsmodibasen mit trennbaren räumlichen Variablen sind.

## Claims

1. Device (1) for processing light radiation, comprising:

   - an optical input (2) for receiving an input beam from an optical source (3) and for propagating input radiation into the device (1), it being possible to describe said input radiation in a base of input modes, referred to as the input mode base, which input modes are not entirely spatially disjointed;
   - an optical output (4) for emitting an output beam;
   - an MPLC conversion device (5) arranged between the optical input (2) and the optical output (4), and configured to transform the input mode base into an output mode base while ensuring that one particular input mode, referred to as the assumed input mode, is transformed into a particular output mode, referred to as the target mode, the MPLC conversion device (5) also being configured to spatially separate, in a separation plane (7), the input radiation into useful radiation, described by the target mode, which propagates towards the optical output (4), and interference radiation described by the output modes other than the target mode;
   - at least one device (8) for blocking the interference radiation, which blocking device is arranged in the separation plane (7) so that it does not contribute to the output beam.

2. Processing device (1) according to the preceding claim, comprising a transmission device (6) for shaping the useful radiation and forming the output beam.

3. Processing device (1) according to one of the preceding claims, comprising a plurality of blocking devices (8) arranged respectively in a plurality of separation planes (7) in which a part of the interference radiation is spatially isolated.

4. Processing device (1) according to one of the preceding claims, wherein the blocking device (8) comprises an absorbing, diffusing or reflecting optical element.

5. Processing device (1) according to one of the preceding claims, wherein the blocking device (8) is integrated at least in part into the MPLC conversion device (5).

6. Processing device (1) according to one of the preceding claims, wherein the blocking device (8) comprises a detection element for collecting at least part of the interference radiation.

7. Processing device (1) according to one of claims 2 to 6, wherein the transmission device (6) comprises, arranged downstream of the conversion device (5), a diffractive optical element, a spatial phase modulator, an optical system comprising at least one lens, an axicon, a beam splitter and/or a second MPLC conversion device.

8. Processing device (1) according to one of claims 2 to 7, wherein the transmission device (6) is integrated at least in part into the MPLC conversion device (5).

9. Processing device (1) according to one of claims 2 to 7, wherein the transmission device (6) comprises at least one non-spherical and non-planar optical element, and preferably between 1 and 3 non-spherical and non-planar optical elements.

10. Processing device (1) according to the preceding claim, wherein the non-spherical and non-planar optical element is a reflective optical element.

11. Processing device (1) according to one of the preceding claims, also comprising a control device (9) between the optical input (2) and the MPLC conversion device (5).

12. Processing device (1) according to the preceding claim, wherein the control device (9) is an inactive optical element.

13. Processing device (1) according to one of the preceding claims, wherein the input and output mode bases have separable spatial variables.

Fig.1

Fig.2

Fig.3

Fig.4

$$E(x,y) = k0\, E_{00}(x,y) + k_1\, E_{01}(x,y) \ldots + k_8\, E_{33}(x,y)$$

Fig.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 9250454 B
- WO 2018104725 A
- US 2017010463 A
- FR 1851664

**Littérature non-brevet citée dans la description**

- **MORIZUR et al.** Programmable unitary spatial mode manipulation. *J. Opt. Soc. Am. A,* Novembre 2010, vol. 27 (11
- **V. DELAUBERT.** Quantum measurements of spatial conjugate variables: displacement and tilt of a Gaussian beam. *Optics Letters,* 2006, vol. 31 (10), 1537-1539, https://www.osapublishing.org/ol/abstract.cfm?uri=ol-31-10-1537
- Fabrication and Characterization of a Mode-selective 45-Mode Spatial Multiplexer based on Multi-Plane Light Conversion. **BADE et al.** Optical Fiber Communication Conférence Postdeadline Papers, OSA Technical Digest. Optical Society of America, 2018, 1-3